(19) Europäisches Patentamt
European Patent Office
Office européen des brevets

(11) **EP 4 622 169 A1**

(12) **EUROPEAN PATENT APPLICATION**
published in accordance with Art. 153(4) EPC

(43) Date of publication:
**24.09.2025 Bulletin 2025/39**

(21) Application number: **23890462.7**

(22) Date of filing: **13.10.2023**

(51) International Patent Classification (IPC):
**H04L 9/40** (2022.01)

(52) Cooperative Patent Classification (CPC):
**H04B 17/30; H04L 9/40**

(86) International application number:
**PCT/CN2023/124493**

(87) International publication number:
**WO 2024/104025 (23.05.2024 Gazette 2024/21)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.11.2022 CN 202211429886**

(71) Applicant: **Lenovo (Beijing) Limited
Beijing 100085 (CN)**

(72) Inventors:
• **WANG, Jianfeng
  Beijing 100085 (CN)**
• **WANG, Haiming
  Beijing 100085 (CN)**
• **BAO, Tingnan
  Beijing 100085 (CN)**

(74) Representative: **Mewburn Ellis LLP
Aurora Building
Counterslip
Bristol BS1 6BX (GB)**

(54) **DATA PROCESSING METHOD, AND DEVICE**

(57) Provided in the present application is a data processing method, which is applied to a first device. The method comprises: receiving a sensing service request, which is sent by a second device, the sensing service request at least carrying first information and second information, wherein the first information at least represents that a reconfigurable intelligent surface is supported to encrypt a sensing service, and the second information represents request content; and sending coefficient configuration information or sensing data of the reconfigurable intelligent surface to the second device on the basis of the first information and the second information, wherein the sensing data carries encryption information of the reconfigurable intelligent surface. Meanwhile, further provided in the present application is an electronic device.

receive a sensing service request sent by a second device, where the sensing service request at least carries first information and second information, where the first information at least indicates that encryption of a sensing service by a re-configurable intelligent surface is enabled, and the second information indicates substance of the request. — 101

send, based on the first information and the second information, coefficient configuration information of the re-configurable intelligent surface, or sensing data, to the second device, where the sensing data carries encryption information of the re-configurable intelligent surface — 102

**FIG. 1**

## Description

The present application claims priority to Chinese Patent Application NO. 202211429886.2, titled "DATA PROCESSING METHOD AND DEVICE", filed November 15, 2022 with the China National Intellectual Property Administration, the entire of which is incorporated herein by reference.

## FIELD

The present disclosure relates to data processing technologies, and in particular to a data processing method and a device thereof.

## BACKGROUND

In recent years, wireless sensing (Wireless Sensing) technology has attracted more and more attention in the research field. This technology detects changes in certain characteristics (such as phase, power, eigenvalue, etc.) of a received wireless signal to extract specific information or characterize the occurrence of a certain behavior, to fulfill a desired service or assist in achieving more efficient communication transmission. In practice, due to the characteristics of wireless sensing technology (i.e., sensing data can be directly obtained through the characteristics of wireless signal changes), it is easy for some illegal devices to obtain personal privacy of a user, causing potential safety hazards to the user.

## SUMMARY

The following technical solutions are provided according to the present disclosure.

In a first aspect of the present disclosure, a data processing method is provided, which is applied to a first device. The method includes:

receiving, from a second device, a sensing service request,

where the sensing service request at least carries first information and second information, the first information at least indicates that encryption of a sensing service by a re-configurable intelligent surface is enabled, and the second information indicates substance of the request; and

sending, to the second device, coefficient configuration information of the re-configurable intelligent surface, or sensing data based on the first information and the second information, where the sensing data carries encryption information of the re-configurable intelligent surface.

In the above solution, sending, to the second device the coefficient configuration information of the re-configurable intelligent surface based on the first information and the second information includes:

determining, based on the second information, that the sensing service request is used to request the first device to send a sensing signal;

determining, based on first sub-information in the first information, the coefficient configuration information of the re-configurable intelligent surface, where the first sub-information indicates that the encryption of the sensing service by the re-configurable intelligent surface is enabled; and

sending, to the second device, the coefficient configuration information.

In the above solutions, sending, to the second device, the sensing data based on the first information and the second information, includes:

determining, based on the second information, that the sensing service request is used to request the first device to receive a sensing signal;

receiving, from the second device, the sensing signal

parsing the sensing signal to obtain parsed data;

encrypting the parsed data based on the first information to obtain the sensing data; and

sending, to the second device, the sensing data.

In the above solutions, the method further includes:

determining, based on second sub-information in the first information, service resource information of a sensing area, where the second sub-information includes at least one of a service type and a service requirement; and

sending, to the second device, the sensing signal based on the service resource information and the coefficient configuration information.

In the above solutions, sending, to the second device, the sensing signal based on the service resource information and the coefficient configuration information includes:

controlling, based on the coefficient configuration information, the re-configurable intelligent surface to configure a reflection coefficient corresponding to a target time slot; and

sending, to the second device, the sensing signal based on the service resource information, in a corresponding time slot with a corresponding reflection coefficient.

In the above solutions, determining, based on the first sub-information in the first information, the coefficient configuration information of the re-configurable intelligent surface includes:

obtaining coefficient feature information of the re-configurable intelligent surface based on the first sub-information; and

generating the coefficient configuration information of the re-configurable intelligent surface based on the coefficient feature information.

In the above solutions, encrypting the parsed data based on the first information to obtain the sensing data includes:

determining the coefficient configuration information of the re-configurable intelligent surface based on the first information;

controlling, based on the coefficient configuration information, the re-configurable intelligent surface to configure a reflection coefficient corresponding to a target time slot; and

encrypting the parsed data based on the reflection coefficient corresponding to the target time slot, to obtain the sensing data.

In the above solutions, a time slot interval corresponding to the reflection coefficient is greater than a time slot interval corresponding to the sensing signal.

In a second aspect of the present disclosure, a data processing method is provided, which is applied to a second device. The method includes:

sending, to a first device, a sensing service request, where the sensing service request at least carries first information and second information, the first information at least indicates that encryption of a sensing service by a re-configurable intelligent surface is enabled, and the second information indicates substance of the request; and

receiving coefficient configuration information of the re-configurable intelligent surface or sensing data sent by the first device based on the first information and the second information, where the sensing data carries encryption information of the re-configurable intelligent surface.

In the above solution, receiving the coefficient configuration information of the re-configurable intelligent surface sent by the first device based on the first information and the second information includes:
receiving the coefficient configuration information of the re-configurable intelligent surface sent by the first device based on first sub-information in the first information, where the coefficient configuration information indicates a correspondence between a target time slot and a reflection coefficient configured by the re-configurable intelligent surface, the first sub-information indicates that the encryption of the sensing service by the re-configurable intelligent surface is enabled.

In the above solutions, receiving the sensing data sent by the first device based on the first information and the second information includes:

sending, to the first device, a sensing signal; and

receiving the sensing data sent by the first device based on the sensing signal, where the sensing data at least carries a reflection coefficient configured, under the control of the first device based on the first information, by the re-configurable intelligent surface in a current time slot.

In the above solutions, the method further includes:

receiving a sensing signal sent by the first device based on the coefficient configuration information and service resource information, where the service resource information is determined by the first device based on second sub-information in the first information, and the second sub-information includes at least one of a service type and a service requirement;

parsing the sensing signal to obtain sensing data; and

determining a sensing result corresponding to the sensing data based on the coefficient configuration information.

In the above solutions, the method further includes:
determine the sensing result corresponding to the sensing data based on the reflection coefficient carried in the sensing data.

In a third aspect of the present disclosure, a first device is provided, which includes:

a receiving unit, configured to receive, from a second device, a sensing service request, where the sensing service request at least carries first information and second information, the first information at least indicates that encryption of a sensing service by a re-configurable intelligent surface is enabled, and the second information indicates substance of the request; and

a sending unit, configured to send, to the second device, coefficient configuration information of the re-configurable intelligent surface, or sensing data based on the first information and the second information, where the sensing data carries encryption information of the re-configurable intelligent surface.

In a fourth aspect of the present disclosure, a second device is provided, which includes:

a sending unit, configured to send, to a first device, a sensing service request, where the sensing service request at least carries first information and second information, the first information at least indicates that encryption of a sensing service by a re-configurable intelligent surface is enabled, and the second information indicates substance of the request; and

a receiving unit, configured to receive coefficient configuration information of the re-configurable intelligent surface or sensing data sent by the first device based on the first information and the second information, where the sensing data carries encryption information of the re-configurable intelligent surface.

In a fifth aspect of the present disclosure, an electronic device is provided, which includes: a processor and a memory for storing a computer program that can be run on the processor,
where the processor is configured to run the computer program, to execute any one of the method steps in the above-described data processing methods.

In a sixth aspect of the present disclosure, a computer-readable storage medium having stored thereon a computer program is provided, where the computer program, when executed by a processor, implements any one of the method steps in the above-described data processing methods.

With the data processing methods and devices according to the present disclosure, the sensing service request from the second device is received, where the sensing service request at least carries first information and second information, where the first information at least indicates that encryption of a sensing service by a re-configurable intelligent surface is enabled, and the second information indicates substance of the request. The coefficient configuration information of the re-configurable intelligent surface, or the sensing data, is sent to the second device based on the first information and the second information, where the sensing data carries encryption information of the re-configurable intelligent surface. This disclosure provides a solution in which RIS-assisted encryption of a sensing service is introduced in the establishing process of the sensing service. By introducing a controllable RIS device within a sensing range, and flexibly configuring reflection coefficients of the RIS device for encryption and protection of a sensed environment, only an authorized device can obtain the reflection coefficient of the RIS and change features thereof. By contrast, as an unauthorized device does not know the reflection coefficient of the RIS and change features thereof and hence does not know that a propagation environment for a channel has changed, the unauthorized device cannot extract a true feature of a sensing object from a sensing signal, thereby enhancing the security protection of the sensing service.

**BRIEF DESCRIPTION OF THE DRAWINGS**

FIG. 1 is a first flowchart of a data processing method according to the present disclosure;

FIG. 2 is a second flowchart of a data processing method according to the present disclosure;

FIG. 3 is a first schematic structural diagram of an electronic device according to the present disclosure;

FIG. 4 is a second schematic structural diagram of an electronic device according to the present disclosure;

FIG. 5 is a schematic diagram of an implementation scenario of a data processing system according to the present disclosure;

FIG. 6 is a schematic diagram of transmission time slots of sensing signals in related art;

FIG. 7 is a schematic diagram of transmission time slots of sensing signals with different configured RIS coefficients; and

FIG. 8 is a third schematic structural diagram of an electronic device according to the present disclosure.

DETAILED DESCRIPTION

In order to make the purpose, technical solutions and advantages of the present disclosure clearer, the technical solutions according to the embodiments of the present disclosure are clearly and completely described below in conjunction with the drawings in the embodiments of the present disclosure. Apparently, the described embodiments are only some, rather than all embodiments of the present disclosure. Based on the embodiments in the present disclosure, all other embodiments obtained by those skilled in the art without inventive efforts are within the scope of protection of the present disclosure. In the absence of conflict, the embodiments in the present disclosure and the features in these embodiments can be combined with each other arbitrarily. The steps shown in the flowchart of the accompanying drawings can be performed in a computer system executing, for example, a set of computer executable instructions. In addition, although the logical order is shown in the flowchart, in some cases, the steps shown or described can be executed in an order different from that illustrated or described herein.

The technical solutions of the present disclosure are further described in detail below in conjunction with the accompanying drawings and some specific embodiments of the specification.

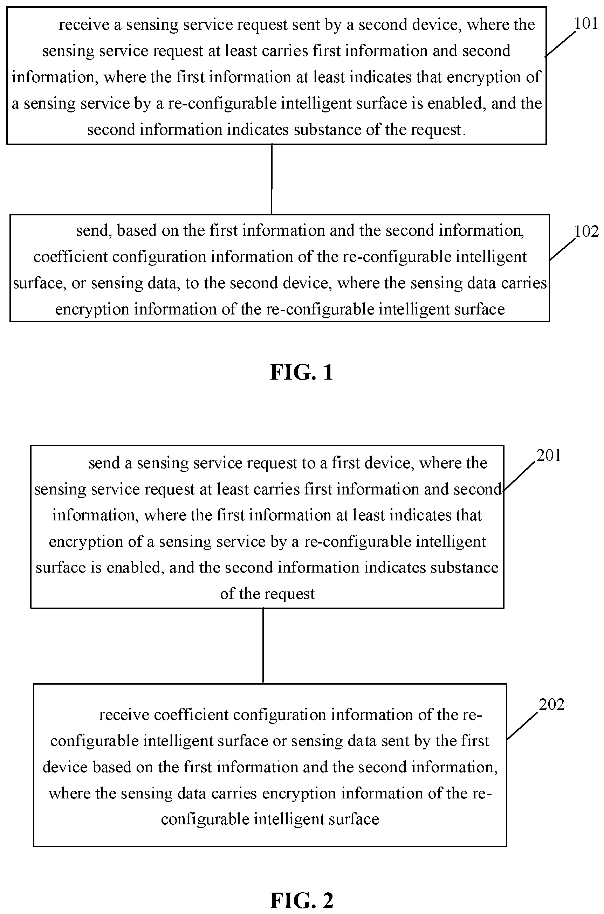

FIG. 1 is a first flowchart of a data processing method according to the present disclosure. The method can be applied to a first device, which may be, for example, a base station or a wireless access point (AP). As shown in FIG.1, the method includes steps 101 and 102.

Step 101 includes receiving a sensing service request sent by a second device, where the sensing service request at least carries first information and second information, where the first information at least indicates that encryption of a sensing service by a re-configurable intelligent surface is enabled, and the second information indicates substance of the request.

In embodiments, the second device includes but is not limited to a mobile phone, a tablet computer, a laptop computer, a desktop computer, an all-in-one device, a smart watch, a smart bracelet, etc. An encrypted communication connection can be established between the first device and the second device, through which the first device can receive a sensing service request sent by the second device, and provide a sensing service for the second device based on the sensing service request.

In the present disclosure, during the communication between the second device and the first device, in order to enable the re-configurable intelligent surface (RIS, Re-configurable Intelligent Surface) to encrypt the sensing service, the second device can add, in the sensing service request, a field descriptor indicating the encryption of the sensing service by a RIS device is enabled. After receiving the sensing service request, the first device can parse the sensing service request. If it is determined according to the parsing result that the sensing service requested by the second device supports/is subject to RIS-encrypted sensing, the sensing service encrypted by the RIS device can be provided to the second device to enhance the security and privacy protection of the sensing service.

In addition, based on the parsing result, the first device can also determine whether the second device requests the first device to send a sensing signal or receive a sensing signal, thereby performing different sensing operations based on different substance of requests to meet sensing service requirements in different application scenarios.

Step 102 includes sending, based on the first information and the second information, coefficient configuration information of the re-configurable intelligent surface, or sensing data, to the second device, where the sensing data carries encryption information of the re-configurable intelligent surface.

In embodiments, when the first device determines, based on the second information, that the sensing service request is used to request the first device to send a sensing signal, the first information may include first sub-information and second sub-information, where the first sub-information may indicate that the encryption of the sensing service by the RIS device is enabled, and the second sub-information includes but is not limited to at least one of a service type and a service requirement. The first device may determine, based on the first sub-information, that the second device is enabled for processing related to RIS-based encryption of the sensing service, and when it is determined that the second device is enabled for processing related to RIS-based encryption of the sensing service, the first device may determine the coefficient configuration information of the RIS and send the coefficient configuration information to the second device. In embodiments, the coefficient configuration information indicates a correspondence between reflection coefficients identifiers (IDs) of the RIS and time slots, that is, the coefficient configuration information may include periodicity and identifiers.

In the present disclosure, when determining the coefficient configuration information of the RIS, the first device may obtain coefficient feature information of the RIS, and randomly generate the coefficient configuration information of the RIS based on the coefficient feature information. In embodiments, the coefficient feature information of the RIS may refer to a combination of the reflection coefficient IDs.

In embodiments, the first device may determine service resource information (including but not limited to time, bandwidth, and transmission power, etc.) of a sensing area requested by the second device based on the second sub-information, and when the service resource information is determined, the first device may send the sensing signal to the second device based on the service resource information and the coefficient configuration information. In embodiments, a transmission format of the sensing signal includes parameters such as time, frequency, and power.

In embodiments, before sending the sensing signal to the second device, the first device may control, based on the coefficient configuration information of the RIS, the RIS device to configure a reflection coefficient corresponding to a target time slot; then send the sensing signal to the second device with the corresponding reflection coefficient in the corresponding time slot based on the determined service resource information. After receiving the sensing signal, the second device may parse the sensing signal to obtain sensing data, and determine, based on the coefficient configuration information, whether a RIS coefficient in the sensing data has changed, so as to obtain a true sensing result based on the change of the RIS coefficient.

In the present disclosure, a time slot interval corresponding to the reflection coefficient configured by the RIS is generally larger than a time slot interval corresponding to the sensing signal.

In the data processing method according to the present disclosure, by sending the coefficient configuration information of the RIS device to the second device before sending the sensing signal to the second device, the second device can determine, based on the coefficient configuration information, whether a reflection coefficient ID of the RIS corresponding to a time slot for the sensing signal has changed, when receiving the sensing signal from the first device. In this way, a sensing object can be accurately sensed based on the change of the reflection coefficient ID of the RIS, with the change of the RIS coefficient already known, to obtain a true sensing result. As an unauthorized device does not know the coefficient configuration information of the RIS, even if the sensing signal from the first device to the second device is intercepted, the unauthorized device cannot obtain the true sensing result of the sensing object since it does not know whether the sensing data in the sensing signal is due to the change of the RIS coefficient or a change of the sensing object, thereby improving the security and privacy of the sensing service.

In the present disclosure, when the first device determines, based on the second information, that the sensing service request is used to request the first device to receive a sensing signal, the first information may only carry a field descriptor indicating encryption of the sensing service by the RIS device is enabled. When the first device determines, based on the field descriptor, that the second device is enabled for processing related to RIS-based encryption of the sensing service, the first device may determine the coefficient configuration information of the RIS device, and control, based on the coefficient configuration information, the RIS device to configure a reflection coefficient corresponding to a target time slot.

In embodiments, when determining the coefficient configuration information of the RIS device, the first device may obtain coefficient feature information of the RIS device, and randomly generate the coefficient configuration information of the RIS based on the coefficient feature information. In embodiments, the coefficient feature information of the RIS may refer to a combination of reflection coefficients, such as a combination of individual electromagnetic units in the RIS device, or a combination of groups of electromagnetic units in the RIS device.

In the present disclosure, when the second device sends a sensing signal to the first device, the first device may receive the sensing signal from the second device, and parse the sensing signal to obtain parsed data; then encrypt, based on the coefficient configuration information of the RIS device, the parsed data with a corresponding reflection coefficient ID in a current time slot, to obtain sensing data; and send the sensing data to the second device through an encrypted communication link. After receiving the sensing data, the second device may parse the sensing data through an encryption protocol of the RIS already negotiated with the first device, to determine whether a reflection coefficient ID carried in the sensing data has changed, thereby determining a sensing result based on the change of the reflection coefficient ID of the RIS.

In embodiments, the first device may obtain coefficient feature information of the RIS device, and randomly generate the coefficient configuration information of the RIS based on the coefficient feature information. A time slot interval corresponding to the reflection coefficients is generally greater than a time slot interval corresponding to the sensing signal.

In the present disclosure, since the first device and the second device communicate through an encrypted communication link, and the encryption protocol for the RIS is negotiated in advance, when receiving the sensing data from the first device, the second device may parse the sensing data based on the encryption protocol of the RIS, to obtain RIS encryption information in the sensing data, and determine the sensing result based on the RIS encryption information. As an unauthorized device does not know the encryption protocol of the RIS, even if the sensing data from the first device to the second device is intercepted, the unauthorized device cannot parse the encryption information of the RIS, and hence cannot know whether the sensing data is due to the change of the coefficient of the RIS or a change of the sensing object. In this way, the unauthorized device cannot obtain the true sensing result, thereby improving the security and privacy of the sensing service.

In this disclosure, in order to obtain expected sensing data through changes in a wireless propagation environment, a node involved in the sensing, especially a sensing service responding terminal (i.e., the first device) can calibrate its cognition of a sensed environment, such as by detecting a wireless channel information in an indoor unmanned state and saving a sensing result for determining whether someone enters the area later. Based on this, the first device may also receive the sensing result from the second device and save the sensing result. If a currently received sensing result is different from a historical sensing result within a preset time period, the first device may send an alarm message to the second device, thereby further improving the security of sensing services for a user.

The data processing method according to this disclosure can be applied to wireless short-range communication technology standards such as WI-FI and NearLink. Among them, in the WI-FI technical standard, a RIS coefficient set ID (RIS-Coeff-SetID) can be introduced each time a signal measurement is set, to indicate RIS coefficient IDs used for this measurement. In another implementation, a RIS coefficient ID set for an entire session is determined, when the session (Session ID) is established. In the NearLink standard, RIS description information, RIS coefficient configuration information, and RIS configuration-related messages can be added to communication domain system messages.

FIG. 2 is a second flowchart of a data processing method according to the present disclosure. As shown in FIG. 2, the method includes steps 201 and 202.

Step 201 includes sending a sensing service request to a first device, where the sensing service request at least carries first information and second information, where the first information at least indicates that encryption of a sensing service by a re-configurable intelligent surface is enabled, and the second information indicates substance of the request.

Step 202 includes receiving coefficient configuration information of the re-configurable intelligent surface or sensing data sent by the first device based on the first information and the second information, where the sensing data carries encryption information of the re-configurable intelligent surface.

In embodiments, there may be multiple first devices, and the second device may broadcast the sensing service request to the multiple first devices. Based on the sensing service request, the second device can query, select and negotiate a responding node that can participate in and provide the sensing service within a sensing area. The negotiation process includes: the second device (sensing service request terminal) negotiates with the first device (sensing responding node), and determines radio resources (such as time, bandwidth, and transmission power, etc.) required for the sensing signal based on a sensing service requirement and an environmental condition. The multiple first devices determine, based on the sensing service request, whether each of the multiple first devices meets the resource requirement, so that a first device meeting the resource requirement sends a sensing signal to the second device or receives a sensing signal.

In practice, there may be one first device, and the second device actively triggers, according to a device identifier, sending of the sensing service request to the first device expected to obtain the sensing data. The first device sends the sensing signal to the second device or receives the sensing signal.

In the process of a sensing service, in order to enable a RIS device to encrypt the sensing service, the second device may add, in the sensing service request, a field descriptor indicating the encryption of the sensing service by the RIS device is enabled, and the first device (such as a sensing responding terminal) can parse the field descriptor and determine, based on a parsing result, that the sensing service within a sensing area supports/is subject to RIS-assisted sensing. In addition, in the process of establishing the sensing service, the first device may determine sensing resource information corresponding to the sensing service, based on the sensing service requirement and sensing service type information carried in the sensing service request, and also determine the coefficient configuration information of the RIS device, that is, a configuration of RIS-Coeff-SetID (including a period and a specific reflection coefficient ID sequence). The coefficient configuration information of the RIS device may be sent from the first device to the second device (authorized sensing responding terminal) through an encrypted communication link.

In the present disclosure, the first information may include first sub-information and second sub-information, where the first sub-information indicates the encryption of the sensing service by the RIS is enabled, and the second sub-information includes at least one of a service type and a service requirement. The first device may determine, based on the first sub-information, that the second device is enabled for processing related to encryption of the sensing service by the RIS device, and determine, based on the second sub-information, service resource information corresponding to the sensing signal requested by the second device.

In embodiments, when the second device requests the first device to send a sensing signal, the second device may receive the coefficient configuration information of the RIS sent by the first device based on the first sub-information. The coefficient configuration information indicates a correspondence between a target time slot and the reflection coefficient configured by the RIS. Then, the second device receives the sensing signal sent by the first device based on the coefficient configuration information and the service resource information. After receiving the sensing signal, the second device parses the sensing signal based on the coefficient configuration information to obtain the sensing data.

In embodiments, when the second device requests the first device to receive a sensing signal, the second device may send the sensing signal to the first device, and receive sensing data sent by the first device based on the sensing signal, where the sensing data at least carries a reflection coefficient that is configured, under the control of the first device based on the first information, by the RIS in a current time slot. The second device parses the sensing data based on an RIS encryption protocol negotiated with the first device, determines a change of the reflection coefficient, and determines a sensing result according to the change of the reflection coefficient.

In embodiments, when determining that the second device is enabled for processing related to RIS encryption of the sensing service, the first device may randomly generate the coefficient configuration information of the RIS according to coefficient feature information of the RIS device, and control the RIS device to configure a correspondence between time slots and reflection coefficient IDs according to the coefficient configuration information.

In embodiments, when a sensing signal transmitter sends the sensing signal, a transmission format of the sensing signal includes at least time, frequency and power, which may be determined by a sensing unit in a basic service layer based on the service requirement in the sensing service request. A sensing signal receiver may be determined by a sensing control unit also in the basic service layer based on the service requirement in the sensing service request, such as obtaining channel state information or average power of received signals, etc.

It should be noted that the data processing method according to the above embodiments and the processing method according to the embodiments corresponding to FIG. 1 pertain to the same idea, and reference may be made to the method embodiments corresponding to FIG. 1 for specific implementations thereof, which are not repeated herein.

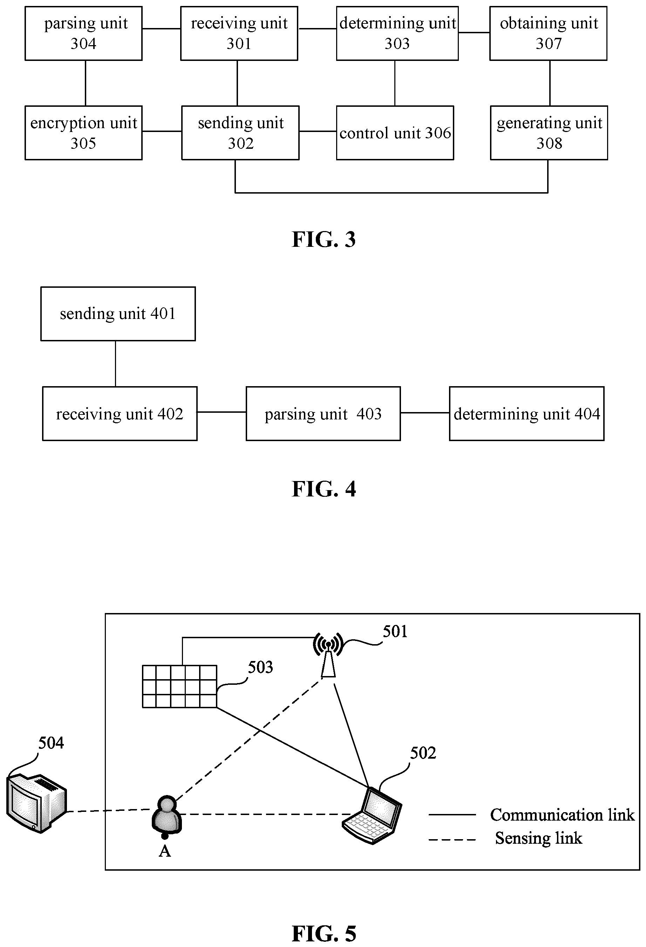

FIG. 3 is a first schematic structural diagram of an electronic device according to the present disclosure. As shown in FIG. 3, the electronic device includes:

a receiving unit 301, configured to receive a sensing service request sent by a second device, where the sensing service request at least carries first information and second information, where the first information at least indicates that encryption of a sensing service by a re-configurable intelligent surface is enabled, and the second information indicates substance of the request; and

a sending unit 302, configured to send, based on the first information and the second information, coefficient configuration information of the re-configurable intelligent surface, or sensing data, to the second device, where the sensing data carries encryption information of the re-configurable intelligent surface.

In embodiments, the electronic device includes but is not limited to at least one of a base station and an AP, and the second device includes but is not limited to a terminal, such as a mobile phone, a computer, a watch, or a bracelet.

In a preferred embodiment, the electronic device further comprises:

a determining unit 303, configured to determine, based on the second information, that the sensing service request is used to request the first device to send a sensing signal, and determine, based on first sub-information in the first information, the coefficient configuration information of the re-configurable intelligent surface, where the first sub-information indicates that the encryption of the sensing service by the re-configurable intelligent surface is enabled; and

the sending unit 302 is configured to send the coefficient configuration information to the second device.

In a preferred embodiment, the electronic device further comprises: a parsing unit 304 and an encryption unit 305.

In embodiments, the determining unit 303 is further configured to determine, based on the second information, that the sensing service request is used to request the first device to receive a sensing signal;

the receiving unit 301 is configured to receive the sensing signal sent by the second device;

the parsing unit 304 is configured to parse the sensing signal to obtain parsed data;

the encryption unit 305 is configured to encrypt the parsed data based on the first information to obtain the sensing data; and

the sending unit 302 is configured to send the sensing data to the second device.

In a preferred embodiment, the determining unit 303 is further configured to determine, based on second sub-information in the first information, service resource information of a sensing area, where the second sub-information includes at least one of a service type and a service requirement; and
the sending unit 302 is configured to send the sensing signal to the second device based on the service resource information and the coefficient configuration information.

In a preferred embodiment, the electronic device further comprises:

a control unit 306, configured to control, based on the coefficient configuration information, the re-configurable intelligent surface to configure a reflection coefficient corresponding to a target time slot; and

the sending unit 302 is configured to send, based on the service resource information, the sensing signal to the second device in a corresponding time slot with a corresponding reflection coefficient.

In a preferred embodiment, the electronic device further comprises:

an obtaining unit 307, configured to obtain coefficient feature information of the re-configurable intelligent surface based on the first sub-information; and

a generating unit 308, configured to generate the coefficient configuration information of the re-configurable intelligent surface based on the coefficient feature information.

In a preferred embodiment, the determining unit 303 is further configured to determine the coefficient configuration information of the re-configurable intelligent surface based on the first information;

the control unit 306 is configured to control, based on the coefficient configuration information, the re-configurable intelligent surface to configure a reflection coefficient corresponding to a target time slot; and
the encryption unit 305 is further configured to encrypt the parsed data based on the reflection coefficient corresponding to the target time slot, to obtain the sensing data.

In a preferred embodiment, a time slot interval corresponding to the reflection coefficient is greater than a time slot interval corresponding to the sensing signal.

It should be noted that: when the electronic device according to the above embodiments performs data processing, the division of the above program modules is merely an example, and in practical application, the above processing can be assigned to different program modules as needed, that is, the internal structure of the device is divided into different program modules to complete all or some of the processing described above. In addition, the electronic device according to the above embodiments and the processing method according to the embodiments corresponding to FIG. 1 pertain to the same idea, and reference may be made to the method embodiments corresponding to FIG. 1 for specific implementations of the electronic device, which are not repeated herein.

FIG. 4 is a second schematic structural diagram of an electronic device according to the present disclosure. As shown in FIG. 4, the electronic device includes:

a sending unit 401, configured to send a sensing service request to a first device, where the sensing service request at least carries first information and second information, where the first information at least indicates that encryption of a sensing service by a re-configurable intelligent surface is enabled, and the second information indicates substance of the request; and

a receiving unit 402, configured to receive coefficient configuration information of the re-configurable intelligent surface or sensing data sent by the first device based on the first information and the second information, where the sensing data carries encryption information of the re-configurable intelligent surface.

In a preferred embodiment, the receiving unit 402 is configured to receive the coefficient configuration information of the re-configurable intelligent surface sent by the first device based on first sub-information in the first information and the second information, where the coefficient configuration information indicates a correspondence between a target time slot and a reflection coefficient configured by the re-configurable intelligent surface, the first sub-information indicates that the encryption of the sensing service by the re-configurable intelligent surface is enabled, and the second information indicates requesting the first device to send a sensing signal.

In a preferred embodiment, the sending unit 401 is further configured to send a sensing signal to the first device; and

the receiving unit 402 is configured to receive the sensing data sent by the first device based on the sensing signal, where the sensing data at least carries a reflection coefficient configured, under the control of the first device based on the first information, by the re-configurable intelligent surface in a current time slot.

In a preferred embodiment, the electronic device further comprises: a parsing unit 403 and a determining unit 404,

where the receiving unit 402 is configured to receive a sensing signal sent by the first device based on the coefficient configuration information and service resource information, where the service resource information is determined by the first device based on second sub-information in the first information, and the second sub-information includes at least one of a service type and a service requirement;

the parsing unit 403 is configured to parse the sensing signal to obtain sensing data; and

the determining unit 404 is configured to determine a sensing result corresponding to the sensing data based on the coefficient configuration information.

In a preferred embodiment, the determining unit 404 is further configured to determine the sensing result corresponding to the sensing data based on the reflection coefficient carried in the sensing data.

It should be noted that: when the electronic device according to the above embodiments performs data processing, the division of the above program modules is merely used as an example, and in practical application, the above processing can be assigned to different program modules as needed, that is, the internal structure of the device is divided into different program modules to complete all or some of the processing described above. In addition, the electronic device according to the above embodiments and the processing method according to the embodiments corresponding to FIG. 2 pertain to the same idea, and reference may be made to the method embodiments corresponding to FIG. 2 for specific implementations of the electronic device, which are not repeated herein.

FIG. 5 is a schematic diagram of an implementation scenario of a data processing system according to the present disclosure. As shown in FIG. 5, in a scenario of communication-sensing-integrated (abbreviated as com-sense-integrated), a centralized control device 501, an authorized device 502 and a RIS device 503 are located in a sensing area (such as a wireless signal coverage area). The centralized control device 501 includes but is not limited to a base station and an AP, and the centralized control device 501 is responsible for the scheduling of wireless communication resources and the transceiving of sensing signals within the sensing area. The authorized device 502 includes but is not limited to a phone or computer of a user. The authorized device 502 can communicate with the centralized control device 501 through an encrypted data link. The RIS device 503 is generally composed of a large number of meticulously designed electromagnetic units. By applying a control signal to a tunable element in the electromagnetic unit, the electromagnetic properties of these electromagnetic units can be dynamically controlled, thereby realizing active intelligent regulation of space electromagnetic waves in a programmable manner, to form an electromagnetic field with controllable amplitude, phase, polarization and frequency. In this way, a wireless propagation environment transforms from passively adaptive to actively controllable, thereby constructing an intelligent wireless environment. Thereby, a propagation link between the centralized control device 501 (such as a base station) and the authorization device 502 is optimized, thereby achieving the purpose of improving the link performance.

In FIG. 5, when the authorization device 502 requests the centralized control device 501 to send a sensing signal, if the sensing service request carries a field descriptor indicating that encryption of a sensing service by the RIS device 503 is enabled, the centralized control device 501 may randomly generate coefficient configuration information of the RIS device 503, send the coefficient configuration information to the authorization device 502, and then control, based on the coefficient configuration information, the RIS device 503 to configure a correspondence between time slots and reflection coefficient IDs. Then, the sensing signal is sent in a target time slot with a corresponding reflection coefficient ID to sense a sensing object in the sensing area (the sensing signal sent by the centralized control device 501 may reuse a communication signal waveform). After receiving the sensing signal, the authorization device 502 parses the sensing signal to obtain sensing data, and determines a sensing result (including but not limited to a position, a speed, and a pose of the sensing object A) corresponding to the sensing data based on the coefficient configuration information of the RIS device 503.

In general, the process of obtaining the sensing result may be expressed by the following equation:

$$\{\text{Sensing result}\} = f(g(H(t0)), g(H(t1)), \ldots, g(H(t(K-1)))),$$

where $H(tk)$ represents channel state information of a receiver of the sensing signal at time $tk$, which can be expressed in a spatial, time or frequency domain; $g(.)$ represents calculation for obtaining the sensing data with the channel state information, such as calculation from an eigenvector, a signal arrival angle, a received signal strength and a signal-to-interference-noise ratio, etc.; $f(.)$ represents a method of obtaining the sensing result through the sensing data, for example, by analyzing the sensing data through machine learning (Machine Learning) or a conventional parameter estimation method.

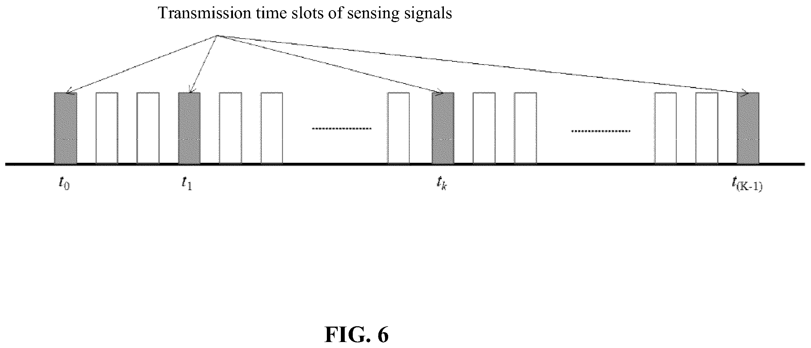

In order to obtain the channel state information (or other received signal features, etc.) of the corresponding time slot $tk$, the sensing signal is scheduled in the time slot (or radio frame) for a receiving device to calculate sensing data information. Generally speaking, a time slot for sending the sensing signal can be multiplexed with a conventional communication time slot by means of the time division duplex (TDD) as shown in FIG. 6. In related art, an unauthorized monitoring device can eavesdrop on a wireless signal sent from a device in a corresponding time slot, and analyze and process the signal, such as obtaining a signal strength of the time slot. As a propagation environment in the sensing area remains relatively unchanged, it is easy for the unauthorized device to obtain state information of the sensing object, which is not conducive to security and privacy protection.

The RIS device 503 is introduced in the sensing area according to the present disclosure, and changes the propagation environment for a channel, so that this "artificial" propagation environment is only visible to the authorized device 502, thereby realizing the privacy protection of the sensing object. The basic principle of this process can be expressed by the following equation:

$$\{\text{Sensing result}\} = f(g(Hid0(t0)), g(Hid0(t1)), \cdots, g(Hidn(t(K-1)))),$$

where $Hidn(tk)$ represents channel state information obtained at a time instant $tk$ by the receiver of the sensing signal, when a set of coefficients identified by $idn$ configured by the RIS device are used.

In the present disclosure, an application duration of a coefficient configured on the RIS device is generally greater than a time slot interval for sending the sensing signal, that is, one time of coefficient setting corresponds to multiple times of sensing signal sending.

In this case, since the unauthorized device does not know a reflection coefficient configuration of the RIS, the wireless propagation environment has been artificially changed, and therefore, a feature of the object can no longer be extracted from the received wireless signal. This is because the coefficient configuration information of the RIS, including the period and coefficient IDs, is sent to the authorized device only through an encrypted communication link. The unauthorized device 504 does not know that the coefficient configuration information of the RIS results in an artificial change to the wireless propagation environment. Therefore, even if the sensing signal sent by the centralized control device 501 to the authorized device 502 is intercepted, the feature of the object cannot be extracted from the sensing signal. In other words, the unauthorized device 504 cannot determine whether the sensing data corresponding to the sensing signal represents a coefficient change of the RIS or a change of the sensing object itself, and thus cannot obtain the true sensing result of the sensing object. The solutions according to this disclosure greatly improves the security and privacy of the sensing service.

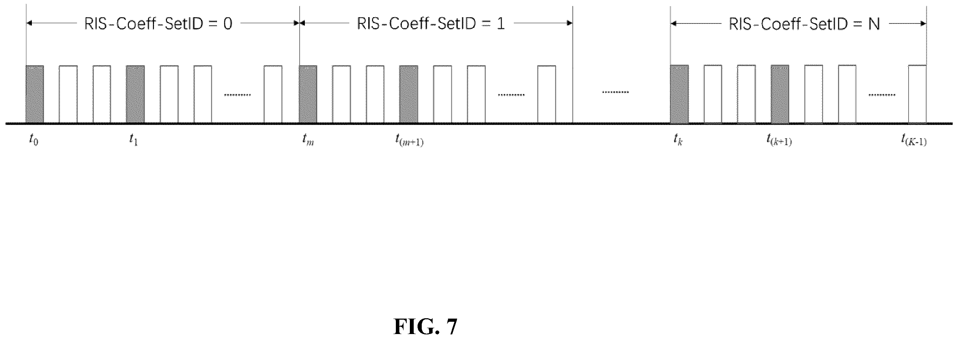

The transmission time slots of sensing signals configured with RIS coefficients is shown in FIG. 7, where RIS-Coeff-SetID represents a reflection coefficient set ID of the RIS and is configured by the centralized control device based on the coefficient feature information of the RIS device. Since the authorized device knows the coefficient change of the RIS device, the authorized device can perform object sensing with the knowledge of the coefficient change of the RIS, such as obtaining channel state information on multiple time slots configured with the same RIS-Coeff-SetID, to obtain sensing data for sensing.

In the present disclosure, the centralized control device 501 may adjust the coefficient configuration information of the RIS device 503 according to an adjustment strategy (for example, every minute); and send the adjusted coefficient configuration information to the authorized device.

It should be noted that: when the data processing system according to the above embodiments performs data processing, it pertains to the same idea as the processing methods and devices according to the embodiments corresponding to FIG. 1 to FIG. 4. Reference may be made to the above method and device embodiments for specific implementations of the system, which are not repeated herein.

An electronic device is further provided according to an embodiment of the present disclosure, which includes: a processor and a memory for storing a computer program that can be run on the processor,
where the processor is configured to run the computer program, to execute any one of the method steps in the above-described processing methods.

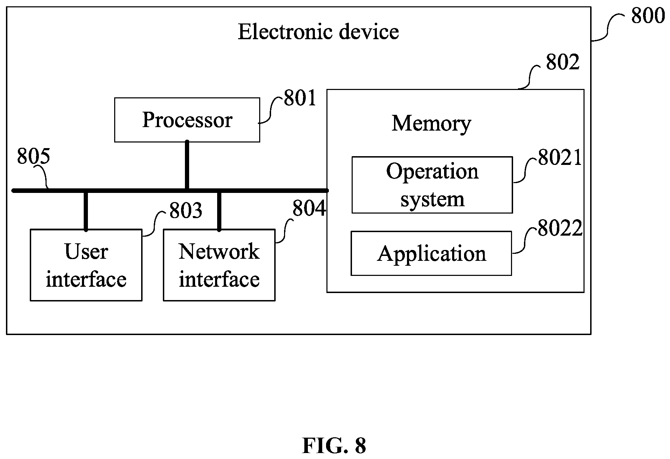

FIG. 8 is a third schematic structural diagram of an electronic device according to the present disclosure. The electronic device 800 may be a base station, an AP, a mobile phone, a computer, a digital broadcast terminal, an information transceiver, a game console, a tablet device, a medical device, a fitness device, or a terminal device such as a personal digital assistant, etc. The electronic device 800 shown in FIG. 8 includes: at least one processor 801, a memory 802, at least one network interface 804, and a user interface 803. The various components in the electronic device 800 are coupled together through a bus system 805. It can be understood that the bus system 805 is used to realize the connection and communication between these components. In addition to a data bus, the bus system 805 also includes a power bus, a control bus, and a status signal bus. Notwithstanding, for the sake of clarity, various buses are marked as bus systems 805 in FIG. 8.

The user interface 803 may include a display, a keyboard, a mouse, a trackball, a click wheel, keys, buttons, a touch pad or a touch screen.

It can be understood that the memory 802 may be a volatile memory or a non-volatile memory, and may include both volatile and non-volatile memories. Among them, the non-volatile memory may be a read-only memory (ROM, Read Only Memory), a programmable read-only memory (PROM, Programmable Read-Only Memory), an erasable programmable read-only memory (EPROM, Erasable Programmable Read-Only Memory), an electrically erasable programmable read-only memory (EEPROM, Electrically Erasable Programmable Read-Only Memory), a ferromagnetic random access memory (FRAM, ferromagnetic random access memory), a flash memory (Flash Memory), a magnetic surface memory, an optical disk, or a compact disc read-only memory (CD-ROM, Compact Disc Read-Only Memory), where the magnetic surface memory may be a disk memory or a tape memory. The volatile memory may be a random access memory (RAM, Random Access Memory), which is used as an external high-speed cache. By way of example but not limitation, many forms of RAM are available, such as static random access memory (SRAM, Static Random Access Memory), synchronous static random access memory (SSRAM, Synchronous Static Random Access Memory), dynamic random access memory (DRAM, Dynamic Random Access Memory), synchronous dynamic random access memory (SDRAM, Synchronous Dynamic Random Access Memory), double data rate synchronous dynamic random access memory (DDRSDRAM, Double Data Rate Synchronous Dynamic Random Access Memory), enhanced synchronous dynamic random access memory (ESDRAM, Enhanced Synchronous Dynamic Random Access Memory), synchronous link dynamic random access memory (SLDRAM, SyncLink Dynamic Random Access Memory), or direct rambus random access memory (DRRAM, Direct Rambus Random Access Memory). The memory 802 described in the embodiments of the present disclosure is intended to include but is not limited to these and any other suitable types of memory.

The memory 802 according to the embodiments of the present disclosure is configured to store various types of data to support the operation of the electronic device 800. Examples of these data include: any computer program for operating on the electronic device 800, such as an operating system 8021 and an application 8022; contact data; phone book data; messages; pictures; audio, etc. Among them, the operating system 8021 includes various system programs, such as a framework layer, a core library layer, a driver layer, etc., which are used to implement various basic services and process hardware-based tasks. The application 8022 can include various applications, such as a media player (Media Player), a browser (Browser), etc., for implementing various application services. The program that implements the method according to the embodiments of the present disclosure may be included in the application 8022.

The method disclosed in the above embodiments of the present disclosure may be applied to the processor 801, or implemented by the processor 801. The processor 801 may be an integrated circuit chip with signal processing capabilities. In implementation, each step of the above methods can be completed by hardware integrated logic circuits or software instructions in the processor 801. The above processor 801 may be a general-purpose processor, a digital signal processor (DSP, Digital Signal Processor), or any other programmable logic device, discrete gate or transistor logic device, discrete hardware component, etc. The processor 801 can implement or execute the methods, steps and logic block diagrams disclosed in the embodiments of the present disclosure. The general-purpose processor may be a microprocessor or any other conventional processor, etc. The steps of the methods disclosed in the embodiments of the present disclosure may be directly executed by a hardware coding processor, or by a combination of hardware and software modules in the coding processor. The software module may be located in a storage medium located in the memory 802, and the processor 801 reads information in the memory 802 and implements the steps of the above methods in combination with its hardware.

In an exemplary embodiment, the electronic device 800 may be implemented by one or more application specific integrated circuits (ASIC, Application Specific Integrated Circuit), DSPs, programmable logic devices (PLD, Programmable Logic Device), complex programmable logic devices (CPLD, Complex Programmable Logic Device), field programmable gate arrays (FPGA, Field-Programmable Gate Array), general-purpose processors, controllers, micro controller units (MCU, Micro Controller Unit), microprocessors (Microprocessor), or any other electronic components, to execute the above-described methods.

In an exemplary embodiment, a computer-readable storage medium is further provided according to the present disclosure, such as the memory 802 including a computer program, and the computer program can be executed by the processor 801 of the electronic device 800 to implement the steps of the above-described methods. The computer-readable storage medium may be a memory such as a FRAM, ROM, PROM, EPROM, EEPROM, Flash Memory, magnetic surface memory, optical disk, or CD-ROM, or any one of various devices including one or any combination of the above memories, such as a mobile phone, a computer, a tablet device, a personal digital assistant, etc.

A computer-readable storage medium stores a computer program, where the computer program, when executed by a processor, implements any one of the steps in the above-described processing methods.

In the various embodiments according to the present disclosure, it should be understood that the disclosed devices and methods can be implemented in other ways. The device embodiments described above are only illustrative. For example, the division of the units is only a logical function division; there may be other manners of division in practical implementation, such as: multiple units or components may be combined, or may be integrated into another system, or some features may be ignored or not executed. In addition, the coupling, direct coupling, or communication connection between the components shown or discussed may be implemented through some interfaces, and the indirect coupling or communication connection between the devices or units may be electrical, mechanical or in any other forms.

The units described above as separate components may or may not be physically separated, and the components described as units may or may not be physical units, that is, they may be located in one place or distributed on multiple network units. Some or all of the units may be selected according to actual needs to achieve the purpose of the solutions according to the embodiments.

The methods disclosed in the method embodiments according to this disclosure can be arbitrarily combined, on condition that they do not conflict with each other, to obtain new method embodiments.

The features disclosed in the product embodiments according to this disclosure can be arbitrarily combined, on condition that they do not conflict with each other, to obtain new product embodiments.

The features disclosed in the method embodiments and device embodiments according to this disclosure can be arbitrarily combined, on condition that they do not conflict with each other, to obtain new method and device embodiments.

The above are only some specific implementations of the present disclosure, but the protection scope of the present disclosure is not limited thereto. Any person skilled in the art who is familiar with the present technical field can easily come up with changes or substitutions within the technical scope disclosed in the present disclosure, which should also fall within the protection scope of the present disclosure. Therefore, the protection scope of the present disclosure should be defined by the protection scope of the claims.

**Claims**

**1.**   A data processing method, applied to a first device, the method comprising:

receiving, from a second device, a sensing service request,
wherein, the sensing service request at least carries first information and second information, the first information at least indicates that encryption of a sensing service by a re-configurable intelligent surface is enabled, and the second information indicates substance of the request; and
sending, to the second device, coefficient configuration information of the re-configurable intelligent surface, or sensing data based on the first information and the second information, wherein, the sensing data carries encryption information of the re-configurable intelligent surface.

2. The method according to claim 1, wherein sending, to the second device, coefficient configuration information of the re-configurable intelligent surface, or sensing data based on the first information and the second information comprises:

determining, based on the second information, that the sensing service request is used to request the first device to send a sensing signal;
determining, based on first sub-information in the first information, the coefficient configuration information of the re-configurable intelligent surface, wherein, the first sub-information indicates that the encryption of the sensing service by the re-configurable intelligent surface is enabled; and
sending, to the second device, the coefficient configuration information.

3. The method according to claim 1, wherein sending, to the second device, the sensing data based on the first information and the second information comprises:

determining, based on the second information, that the sensing service request is used to request the first device to receive a sensing signal;
receiving, from the second device, the sensing signal;
parsing the sensing signal to obtain parsed data;
encrypting the parsed data based on the first information to obtain the sensing data; and
sending, to the second device, the sensing data.

4. The method according to claim 2, further comprising:

determining, based on second sub-information in the first information, service resource information of a sensing area, wherein, the second sub-information comprises at least one of a service type and a service requirement; and
sending, to the second device, the sensing signal based on the service resource information and the coefficient configuration information.

5. The method according to claim 4, wherein sending, to the second device, the sensing signal based on the service resource information and the coefficient configuration information comprises:

controlling, based on the coefficient configuration information, the re-configurable intelligent surface to configure a reflection coefficient corresponding to a target time slot; and
sending, to the second device, , the sensing signal based on the service resource information in a corresponding time slot with a corresponding reflection coefficient.

6. The method according to claim 2, wherein determining, based on the first sub-information in the first information, the coefficient configuration information of the re-configurable intelligent surface comprises:

obtaining coefficient feature information of the re-configurable intelligent surface based on the first sub-information; and
generating the coefficient configuration information of the re-configurable intelligent surface based on the coefficient feature information.

7. The method according to claim 3, wherein encrypting the parsed data based on the first information to obtain the sensing data comprises:

determining the coefficient configuration information of the re-configurable intelligent surface based on the first information;
controlling, based on the coefficient configuration information, the re-configurable intelligent surface to configure a reflection coefficient corresponding to a target time slot; and
encrypting the parsed data based on the reflection coefficient corresponding to the target time slot, to obtain the sensing data.

8. A data processing method, applied to a second device, the method comprising:

sending, to a first device, a sensing service request,

wherein, the sensing service request at least carries first information and second information, the first information at least indicates that encryption of a sensing service by a re-configurable intelligent surface is enabled, and the second information indicates substance of the request; and

receiving coefficient configuration information of the re-configurable intelligent surface or sensing data sent by the first device based on the first information and the second information, wherein, the sensing data carries encryption information of the re-configurable intelligent surface.

9. A first device, comprising:

a receiving unit, configured to receive, from a second device, a sensing service request,

wherein, the sensing service request at least carries first information and second information, the first information at least indicates that encryption of a sensing service by a re-configurable intelligent surface is enabled, and the second information indicates substance of the request; and

a sending unit, configured to send, to the second device, coefficient configuration information of the re-configurable intelligent surface, or sensing data based on the first information and the second information, wherein the sensing data carries encryption information of the re-configurable intelligent surface.

10. A second device, comprising:

a sending unit, configured to send, to a first device, a sensing service request,

wherein, the sensing service request at least carries first information and second information, the first information at least indicates that encryption of a sensing service by a re-configurable intelligent surface is enabled, and the second information indicates substance of the request; and

a receiving unit, configured to receive coefficient configuration information of the re-configurable intelligent surface or sensing data sent by the first device based on the first information and the second information, wherein, the sensing data carries encryption information of the re-configurable intelligent surface.

receive a sensing service request sent by a second device, where the sensing service request at least carries first information and second information, where the first information at least indicates that encryption of a sensing service by a re-configurable intelligent surface is enabled, and the second information indicates substance of the request. 101

send, based on the first information and the second information, coefficient configuration information of the re-configurable intelligent surface, or sensing data, to the second device, where the sensing data carries encryption information of the re-configurable intelligent surface 102

**FIG. 1**

send a sensing service request to a first device, where the sensing service request at least carries first information and second information, where the first information at least indicates that encryption of a sensing service by a re-configurable intelligent surface is enabled, and the second information indicates substance of the request 201

receive coefficient configuration information of the re-configurable intelligent surface or sensing data sent by the first device based on the first information and the second information, where the sensing data carries encryption information of the re-configurable intelligent surface 202

**FIG. 2**

| | | | |
|---|---|---|---|
| parsing unit 304 | receiving unit 301 | determining unit 303 | obtaining unit 307 |
| encryption unit 305 | sending unit 302 | control unit 306 | generating unit 308 |

**FIG. 3**

| |
|---|
| sending unit 401 |

| | | |
|---|---|---|
| receiving unit 402 | parsing unit 403 | determining unit 404 |

**FIG. 4**

——— Communication link
- - - - Sensing link

**FIG. 5**

Transmission time slots of sensing signals

$t_0$   $t_1$   $t_k$   $t_{(K-1)}$

**FIG. 6**

**FIG. 7**

EP 4 622 169 A1

**FIG. 8**

## INTERNATIONAL SEARCH REPORT

| International application No. |
|---|
| **PCT/CN2023/124493** |

**A.    CLASSIFICATION OF SUBJECT MATTER**

H04L 9/40(2022.01)i

According to International Patent Classification (IPC) or to both national classification and IPC

**B.    FIELDS SEARCHED**

Minimum documentation searched (classification system followed by classification symbols)

IPC:H04W,H04L,H04B

Documentation searched other than minimum documentation to the extent that such documents are included in the fields searched

Electronic data base consulted during the international search (name of data base and, where practicable, search terms used)

3GPP, VEN, DWPI, ENTXT, CNTXT, ENTXTC: 标识, 参数, 传输, 对应, 发送, 反射系数, 感测, 感知, 关联, 加解密, 加密, 秘钥, 密钥, 配置, 匹配, 请求, 确定, 时间, 时刻, 时隙, 系数, 相关, 相应, 消息, 协商, id, key, request, server, transmit, information, sensing, service, terminal

**C.    DOCUMENTS CONSIDERED TO BE RELEVANT**

| Category* | Citation of document, with indication, where appropriate, of the relevant passages | Relevant to claim No. |
|---|---|---|
| Y | CN 111405681 A (HUAWEI TECHNOLOGIES CO., LTD.) 10 July 2020 (2020-07-10) description, paragraphs [0020]-[0070] and [0190]-[0315] | 1-10 |
| Y | US 2022361108 A1 (SAMSUNG ELECTRONICS CO., LTD.) 10 November 2022 (2022-11-10) description, paragraphs [0007]-[0011], [0071]-[0139] and [0156]-[0227] | 1-10 |
| A | WO 2014072156 A1 (MOVYM S.R.L.) 15 May 2014 (2014-05-15) entire document | 1-10 |
| A | US 2019149513 A1 (HUAWEI TECHNOLOGIES CO., LTD.) 16 May 2019 (2019-05-16) entire document | 1-10 |
| A | WO 2017066910 A1 (HUAWEI TECHNOLOGIES CO., LTD.) 27 April 2017 (2017-04-27) entire document | 1-10 |

☐ Further documents are listed in the continuation of Box C.      ☑ See patent family annex.

| | |
|---|---|
| *    Special categories of cited documents: | "T"   later document published after the international filing date or priority date and not in conflict with the application but cited to understand the principle or theory underlying the invention |
| "A"   document defining the general state of the art which is not considered to be of particular relevance | |
| "D"   document cited by the applicant in the international application | "X"   document of particular relevance; the claimed invention cannot be considered novel or cannot be considered to involve an inventive step when the document is taken alone |
| "E"   earlier application or patent but published on or after the international filing date | |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | "&"   document member of the same patent family |
| "P"   document published prior to the international filing date but later than the priority date claimed | |

| Date of the actual completion of the international search | Date of mailing of the international search report |
|---|---|
| **05 December 2023** | **22 December 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2023/124493**

| Patent document cited in search report | | | Publication date (day/month/year) | Patent family member(s) | | | Publication date (day/month/year) |
|---|---|---|---|---|---|---|---|
| CN | 111405681 | A | 10 July 2020 | US | 2023129780 | A1 | 27 April 2023 |
| | | | | WO | 2021185141 | A1 | 23 September 2021 |
| | | | | EP | 4110004 | A1 | 28 December 2022 |
| US | 2022361108 | A1 | 10 November 2022 | WO | 2022240072 | A1 | 17 November 2022 |
| | | | | CN | 115315012 | A | 08 November 2022 |
| WO | 2014072156 | A1 | 15 May 2014 | EP | 2728791 | A1 | 07 May 2014 |
| US | 2019149513 | A1 | 16 May 2019 | WO | 2018001042 | A1 | 04 January 2018 |
| | | | | EP | 3468120 | A1 | 10 April 2019 |
| | | | | CN | 107547478 | A | 05 January 2018 |
| WO | 2017066910 | A1 | 27 April 2017 | CN | 106464525 | A | 22 February 2017 |

Form PCT/ISA/210 (patent family annex) (July 2022)

**EP 4 622 169 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211429886